(19) Europäisches Patentamt
European Patent Office
Office européen des brevets

(11) **EP 2 180 591 B1**

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(51) Int Cl.:
***H02P 1/04*** *(2006.01)* ***H02P 6/06*** *(2006.01)*
***H02P 7/28*** *(2006.01)* ***H02P 6/10*** *(2006.01)*

(21) Anmeldenummer: **08167119.0**

(22) Anmeldetag: **21.10.2008**

(54) **Verfahren zur automatischen Bestimmung der Systemdynamik und/oder der Position eines permanenterregten Gleichstrommotors**

Method for automatically determining the system dynamic and/or position of a permanently excited direct current motor

Procédé destiné à la détermination automatique de la dynamique systémique et/ou de la position d'un moteur à courant continu excité en permanence

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**28.04.2010 Patentblatt 2010/17**

(73) Patentinhaber: **Hella KGaA Hueck & Co.**
**59552 Lippstadt (DE)**

(72) Erfinder: **Fender, Carsten**
**59379, Selm (DE)**

(56) Entgegenhaltungen:
**EP-A- 1 037 052** **EP-A- 1 627 797**
**EP-A- 1 659 683** **DE-A1- 10 124 615**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf ein Verfahren zur automatischen Bestimmung der Systemdynamik und/oder der Position eines permanenterregten Gleichstrommotors, bei dem ein elektrisches Signal, insbesondere ein Motorstromsignal $I_{Motor}$, des permanenterregten Gleichstrommotors erfasst wird und mittels einer adaptiven Filtereinrichtung mit einer einstellbaren Bandmittenfrequenz $f_B$ gefiltert wird, so dass ein gefiltertes elektrisches Signal erzeugt wird, und wobei die Ripple des gefilterten elektrischen Signals erfasst werden und aus den im gefilterten elektrischen Signal erfassten Ripplen die Ist-Frequenz $f_{Ripple}$ der Ripple bestimmt wird.

Im Stand der Technik werden permanenterregte Gleichstrommotoren als Stellantriebe in vielfältiger Weise und in unterschiedlichen Bereichen eingesetzt. Sie dienen zum Beispiel als Stellantriebe für eine elektromotorische Einstellung von Fahrzeugsitzen oder für das Öffnen beziehungsweise Schließen von Fahrzeugfenstern oder Fahrzeugschiebedächern. Häufig kommt es bei derartigen Anwendungen auf eine positionsgenaue Einstellung derartiger Fahrzeugkomponenten an. Bei den derzeit im Stand der Technik eingesetzten Verfahren werden zur Positionierung des elektrischen Antriebs zumeist Hall-Sensoren eingesetzt. Dabei entstehen relativ hohe Kosten für den Sensor, die dazugehörige Elektronik zur Aufbereitung des Sensorsignals, einen speziellen Magneten sowie für die Leitungen zur Verdrahtung.

Aus dem Stand der Technik sind permanenterregte Gleichstrommotoren mit einer sensorlosen Positionserkennung nach einem so genannten "Ripple"-Zählverfahren bekannt. Bei einem Übergang der Bürsten eines Gleichstrommotors von einer Statorlamelle zu einer anderen Statorlamelle entstehen Störimpulse im Ankerstrom des Motors (kurz: Motorstrom), die dem Ankerstromsignal eine gewisse Welligkeit aufprägen. Diese Welligkeit wird häufig auch als "Ripple" bezeichnet. Das Ankerstromsignal weist mit anderen Worten also einen Gleichstromanteil sowie einen Wechselstromanteil auf, welcher dem Gleichstromanteil überlagert ist. Bei einer Umdrehung des Ankers treten die Ripple in einer Häufigkeit auf, die der Anzahl der Statorlamellen entspricht, so dass durch eine Zählung der Ripple auf die Position beziehungsweise den Drehwinkel des elektrischen Antriebs geschlossen werden kann.

Ein Problem stellt häufig die Signalaufbereitung des Ankerstromsignals dar, um eine zuverlässige Erfassung der Ripple zu ermöglichen. Bei Ripple-Zählverfahren werden derzeit zahlreiche unterschiedliche Verfahrenvarianten eingesetzt. Der Schwerpunkt liegt dabei auf der Verwendung von Motormodellen in Verbindung mit Detektionsverfahren, die auf einer Minima-Maxima-Erkennung beruhen. Derartige Motormodelle basieren auf den Motorgrundgleichungen und dienen zur Steuerung von Hardware-Filtern.

Aus der DE 195 11 307 C1 ist ein Verfahren bekannt, bei dem der Verlauf des Motorstromsignals kontinuierlich überwacht wird. Kommt es im Verlauf des Motorstromsignals zu einem Wendepunkt und liegt dieser Amplitudenwert 50% über den letzten Minima, wird ein PWM-Signal (PWM = Pulsweitenmodulation) ausgegeben, welches für einen detektierten Ripple steht.

Ferner ist es bereits bekannt, ein detektiertes Motorstromsignal mittels einer adaptiven Filtereinrichtung zu filtern, damit Störsignale (Ripple) aus dem Motorstromsignal extrahiert werden können. Da sich die Drehzahl des permanenterregten Gleichstrommotors bei unterschiedlichen Belastungen sowie während der Start- beziehungsweise Stopphase ändert, muss die Filterfrequenz der adaptiven Filtereinrichtung nachgeführt werden. Dabei wurde bislang eine Eigenabschätzung der Filterfrequenz der adaptiven Filtereinrichtung durchgeführt.

Ein Verfahren der eingangs genannten Art ist aus der EP 1 659 693 A1 bekannt. Die DE 101 24 615 A1 offenbart ein Verfahren zum Korrigieren einer Drehstellungsbestimmung einer Antriebswelle eines kommutierten Gleichstrommotors. Dies erfolgt durch Auswerten der im Ankerstromsignal enthaltenen Stromripple bei Auftreten von Fehlerripplen, wenn innerhalb eines einen definierten Zeitpunkt nach dem zuletzt detektierten Stromripple umgebenden Toleranzbereichs kein weiterer Stromripple erkannt wird. Dabei wird die Größe des den Zeitpunkt einer erwarteten Stromrippledetektion umgebenden Toleranzbereichs, in dem eine Korrektur des Zählergebnisses nicht erforderlich ist, dynamisch an sich ändernde Betriebszustände des Gleichstrommotors angepasst.

Während der Anlaufphase eines permanenterregten Gleichstrommotors stellt sich das Problem, dass es einen systemimmanenten Frequenzsprung gibt. Dieser Frequenzsprung ist nicht auf die Ripplefrequenz zurückzuführen und stellt daher einen falschen Frequenzverlauf dar. Während der Anlaufphase werden die Oberwellenanteile der tatsächlichen Ripplefrequenz detektiert. Es stellt sich daher das Problem, dass deutlich mehr Ripple gezählt werden als tatsächlich im Motorstromsignal des permanenterregten Gleichstrommotors vorhanden sind. Die Folge ist eine fehlerhafte Filterung des Motorstromsignals, was zu einer nicht unerheblichen Anzahl falsch detektierter Ripple führt. Ein weiterer Nachteil der aus dem Stand der Technik bekannten Verfahren besteht darin, dass sie nicht ausreichend langzeitstabil sind.

Hier setzt die vorliegende Erfindung an.

Der vorliegenden Erfindung liegt die Aufgabe zu Grunde, ein Verfahren der eingangs genannten Art zur Bestimmung der Systemdynamik und/oder der Position eines permanenterregten Gleichstrommotors zur Verfügung zu stellen, das im Vergleich zu den aus dem Stand der Technik bekannten Lösungen eine größere Stabilität und eine höhere Genauigkeit bei der Frequenzbestimmung aufweist sowie die Störempfindlichkeit gegen starke Oberwellenanteile während der Anlaufphase des permanenterregten Gleichstrommotors wirksam reduzieren kann.

Diese Aufgabe wird durch ein Verfahren mit den Merkmalen des Anspruchs 1 gelöst. Die Unteransprüche betreffen vorteilhafte Weiterbildungen der Erfindung.

Bei einem erfindungsgemäßen Verfahren zur automatischen Bestimmung der Systemdynamik und/ oder der Position eines permanenterregten Gleichstrommotors ist gemäß Anspruch 1 vorgesehen, dass

- ein elektrisches Signal, insbesondere ein Motorstromsignal $I_{Motor}$, des permanenterregten Gleichstrommotors erfasst wird und mittels einer adaptiven Filtereinrichtung mit einer einstellbaren Bandmittenfrequenz $f_B$ gefiltert wird, so dass ein gefiltertes elektrisches Signal erzeugt wird,

- die Ripple des gefilterten elektrischen Signals erfasst werden,

- aus den im gefilterten elektrischen Signal erfassten Ripplen die Ist-Frequenz $f_{Ripple}$ der Ripple bestimmt wird.

Das erfindungsgemäße Verfahren zeichnet sich dadurch aus, dass während der Anlaufphase des permanenterregten Gleichstrommotors die momentane Frequenz $f_M$ der Ripple berechnet wird und ein Erwartungswert der Frequenz $<f_{Ripple}>$ aus der Ist-Frequenz $f_{Ripple}$ der Ripple, der berechneten momentanen Frequenz $f_M$ der Ripple und mindestens einem Gewichtungsfaktor berechnet wird, wobei zur Berechnung der momentanen Frequenz $f_M$ ein mathematisches Modell mit einer Exponentialfunktion für den momentanen Strom $I_M$ sowie mit einer Exponentialfunktion für die momentane Frequenz $f_M$ verwendet wird, die über eine mechatronische Zeitkonstante T miteinander verknüpft sind. Mit Hilfe des erfindungsgemäßen Verfahrens ist es auf einfache und zuverlässige Art und Weise möglich, die Position sowie die Geschwindigkeit (Drehzahl) und damit die Systemdynamik eines bewegten, mittels des permanenterregten Gleichstrommotors angetriebenen Fahrzeugteils aus dem Motorstromsignal $I_{Motor}$ ohne zusätzlichen physikalischen Sensor am Motor mit hoher Genauigkeit zu ermitteln.

Das hier vorgestellte Verfahren kann bei unterschiedlichen Anwendungen - beispielsweise bei einer elektrischen Sitz-, Fensterheber- oder Schiebedachverstellung in einem Kraftfahrzeug - eingesetzt werden und sorgt im Vergleich zu den aus dem Stand der Technik bekannten Lösungen für eine größere Stabilität und eine höhere Genauigkeit bei der Frequenzbestimmung. Ein Vorteil der erfindungsgemäßen Lösung besteht darin, dass berechnete Erwartungswerte der Frequenz aus realen Messwerten einerseits und einer modellierten Sprungantwort des permanenterregten Gleichstrommotors andererseits zusammen betrachtet werden und je nach Vertrauungsgrad ein gewichteter Anteil aus beiden Pfaden zur Parameterbestimmung herangezogen wird. Das erfindungsgemäße Verfahren findet seinen Hintergrund in einer optimalen und sicheren Frequenzvorgabe der adaptiven Filtereinrichtung, so dass sich die Ripple aus dem Signalverlauf eines permanenterregten Gleichstrommotors mit wesentlich höherer Genauigkeit extrahieren lassen. Der hier vorgestellte Verfahrensansatz ermöglicht es, dass die Systemsicherheit während der Anlaufphase des permanenterregten Gleichstrommotors deutlich stabiler ist als bei den aus dem Stand der Technik bekannten Lösungen.

Für die modellierte Sprungantwort des permanenterregten Gleichstrommotors werden die Parameter des Verfahrens eigenständig nachgelernt. Damit ist eine exakte Vermessung der Motoren nicht erforderlich. Weiterhin ist die Robustheit gegenüber Alterungseffekten und Fertigungsschwankungen deutlich verbessert.

Ein weiterer, für zahlreiche praktische Anwendungen besonders wichtiger Vorteil des hier vorgestellten Verfahrens besteht darin, dass auch permanenterregte Gleichstrommotoren mit Nutschrägung verwendet werden können. Derartige Gleichstrommotoren zeichnen sich insbesondere dadurch aus, dass sie im Vergleich zu anderen Gleichstrommotoren mit geraden Nuten eine kleinere Rippleamplitude aufweisen. Erschwerend wirkt sich bei permanenterregten Gleichstrommotoren mit Nutschrägung ihr relativ hoher Oberwellenanteil im Signalverlauf (besonders während der Anlaufphase) aus.

Ein weiterer Vorteil des hier vorgestellten Ansatzes ist, dass durch die größere Stabilität während der Anlaufphase des permanenterregten Gleichstrommotors die Software-Komponenten nicht über den gesamten Verfahrweg des Gleichstrommotors verwendet werden müssen. Dies führt zu einer nicht unerheblichen Reduzierung der Rechenzeit. Ferner besteht die Möglichkeit, aus der mechatronischen Systemdynamik die Teilkomponenten, also die mechanischen und elektrischen Anteile, abzuleiten. Die hier vorgestellte Lösung stellt ein effektives Verfahren dar, um aus einem Motorstromsignal eines permanenterregten Gleichstrommotors eine Weg- oder Winkellnformation zu extrahieren und die Systemdynamik zu bestimmen.

In einer besonders vorteilhaften Ausführungsform ist vorgesehen, dass der momentane Strom $I_M$ durch die Gleichung

$$I_M = \frac{U}{R_k(1+\Delta T\cdot\alpha)}\cdot e^{-t/\tau} + I_y$$

bestimmt wird, wobei U die Spannung, $R_k$ der Kaltwiderstand, $\Delta T$ die Temperaturdifferenz, $\alpha$ der Temperaturkoeffizient, t die Zeit, $\tau$ die mechatronische Zeitkonstante und $I_y$ der Offset-Strom ist.

In einer vorteilhaften Ausführungsform ist vorgesehen, dass der momentane Strom $I_M$ mit dem tatsächlichen Verlauf des Motorstroms $I_{Motor}$ verglichen wird und die mechatronische Zeitkonstante $\tau$ adaptiert wird, wenn der momentane Strom $I_M$ vom tatsächlichen Stromverlauf $I_{Motor}$ abweicht.

In einer besonders vorteilhaften Ausführungsform wird vorgeschlagen, dass die momentane Frequenz $f_M$ durch die Gleichung

$$f_M = f \cdot (1 - e^{-t/\tau})$$

bestimmt wird, wobei t die Zeit, $\tau$ die mechatronische Zeitkonstante und f die Frequenz ist.

Neben der Frequenzermittlung anhand der detektierten Ripple stellt die hier vorgeschlagene Lösung einen Ansatz zur Bestimmung der mechatronischen Zeitkonstanten $\tau$ zur Verfügung, die durch die Gegen-Elektromotorische Kraft (Gegen-EMK), welche die Dämpfung des mechatronischen Systems beinhaltet, verursacht wird. Die Ermittlung der mechatronischen Zeitkonstanten $\tau$ geschieht dabei durch die Betrachtung des Anlaufstroms des permanenterregten Gleichstrommotors.

Um Rechenzeit einzusparen und das Verfahren insgesamt beschleunigen und effizienter gestalten zu können, kann in ein einer besonders bevorzugten Ausführungsform vorgesehen sein, dass in einer Nachschlagetabelle Werte für den Offset-Strom $I_y$ und/oder für die maximale Frequenz abrufbar gespeichert werden.

In einer besonders bevorzugten Ausführungsform ist vorgesehen, dass der Erwartungswert der Frequenz $<f_{Ripple}>$ der adaptiven Filtereinrichtung als Bandmittenfrequenz $f_B$ zur Verfügung gestellt wird. Dadurch kann eine optimale Anpassung der Bandmittenfrequenz $f_B$ der adaptiven Filtereinrichtung erreicht werden.

In einer bevorzugten Ausführungsform wird vorgeschlagen, dass die Frequenzberechnung nur in einem Zeitraum bis etwa $2\tau$ durchgeführt wird. Bis zum Erreichen dieses Zeitpunkts ist die Systemdynamik sehr hoch und der Fehler, der durch die verfahrensbedingte Frequenzbestimmung verursacht wird, ist damit ebenfalls hoch.

In einer besonders vorteilhaften ist vorgesehen, dass mittels eines Schwellwertverfahrens aus dem gefilterten Motorstromsignal $I_{Motor}$, gefiltert die darin enthaltene Rippleinformation extrahiert wird. Das Schwellwertverfahren umfasst mindestens einen Schwellwert. Es besteht alternativ auch die Möglichkeit, dass mehrere (also mindestens zwei) Schwellwerte vorgesehen werden, die vorzugsweise über den möglichen Amplitudenbereich des gefilterten Motorstromsignals $I_{Motor,\ gefiltert}$ verteilt sind. Bei der Durchführung des Schwellwertverfahrens wird überprüft, ob die Amplitude des gefilterten Motorstromsignals $I_{Motor}$, gefiltert mindestens eine der Schaltschwellen überschreitet. Damit durch die Anzahl der verschiedenen Schwellwerte keine Fehlinterpretationen des gefilterten Motorstromsignals $I_{Motor}$, gefiltert entstehen, können die einzelnen Schwellwerte - vorzugsweise über eine Logikschaltung - miteinander verknüpf werden. Ein Kernelement dieser Logikschaltung kann insbesondere ein konstanter oder ein dynamischer Zeitwert sein, mittels dessen eine Plausibilisierung der einzelnen Schwellwerte abgesichert werden kann.

Anhand der beigefügten Zeichnungen wird die Erfindung nachfolgend näher erläutert. Dabei zeigt:

Fig. 1 eine schematisch stark vereinfachte Darstellung des Funktionsablaufs ei- nes Verfahrens zur automatischen Bestimmung der Systemdynamik und/oder der Position eines permanenterregten Gleichstrommotors;

Fig. 2 ein Blockdiagramm, das die Funktion einer Frequenzeinstelleinrichtung veranschaulicht, die bei dem in Fig. 1 gezeigten Verfahren eingesetzt wird;

Fig.3 eine graphische Darstellung eines idealisierten Frequenzverlaufs eines permanenterregten Gleichstrommotors während der Anlaufphase sowie zweier berechneter Frequenzverläufe zum Vergleich.

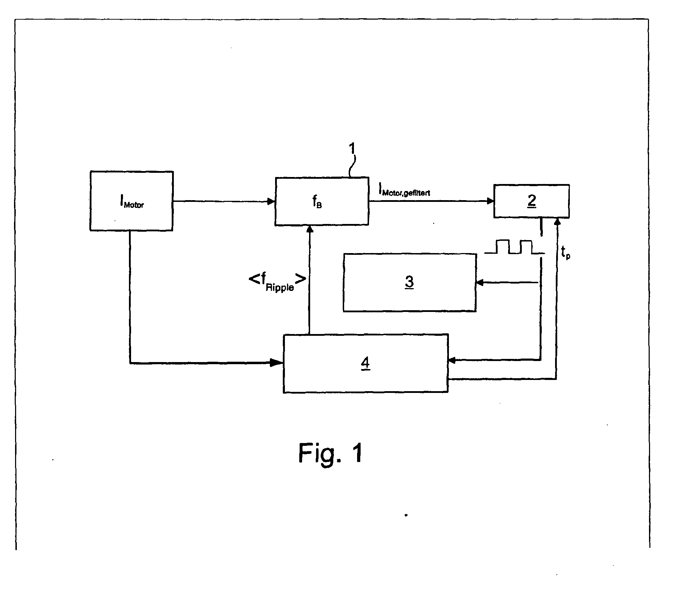

Unter Bezugnahme auf Fig. 1 soll nachfolgend der grundlegende Funktionsablauf eines bevorzugten Ausführungsbeispiels eines Verfahrens zur Bestimmung der Systemdynamik und/oder der Position eines permanenterregten Gleichstrommotors näher erläutert werden. Das nachfolgend beschriebene Verfahren kann in diversen Anwendungsgebieten, wie zum Beispiel bei einer elektrischen Sitz-, Fensterheber- oder Schiebedachverstellung eines Kraftfahrzeugs, eingesetzt werden.

Während des Betriebs des permanenterregten Gleichstrommotors wird über eine elektronische Schaltung ein elektrisches Signal erfasst, das in dem hier dargestellten Ausführungsbeispiel ein Motorstromsignal $I_{Motor}$ ist. An Stelle des Motorstroms $I_{Motor}$ kann das elektrische Signal zum Beispiel auch eine elektrische Spannung oder eine elektrische Leistung sein. Der Motorstrom $I_{Motor}$ weist eine gewisse Welligkeit (nachfolgend kurz "Ripple" genannt) auf, die davon herrührt, dass bei der Kommutierung des Gleichstrommotors bei einem Übergang der Bürsten von einer Statorlamelle zu einer anderen Statorlamelle Störimpulse im Ankerstrom des Motors (kurz: Motorstrom $I_{Motor}$) entstehen, die dem Stromsignal ihre Welligkeit aufprägen.

Das Motorstromsignal $I_{Motor}$ wird anschließend einer adaptiven Filtereinrichtung 1 zugeführt, die veränderbare Filtereigenschaften aufweist. Die adaptive Filtereinrichtung 1 ist ein Bandpassfilter mit einer einstellbaren oder voreingestellten Bandbreite und mit einer einstellbaren Bandmittenfrequenz $f_B$. Mittels der adaptiven Filtereinrichtung 1 kann der Gleichstromanteil aus dem Motorstromsignal $I_{Motor}$ herausgefiltert werden, so dass nur noch der Wechselstromanteil, der dem Gleichstromanteil überlagert ist und das Ripplesignal trägt, erhalten bleibt. Das Motorstromsignal $I_{Motor}$ wird also in der adaptiven Filtereinrichtung 1 bandpassgefiltert, wobei die Bandmittenfrequenz $f_B$ der adaptiven Filtereinrichtung 1 mittels einer Frequenzeinstelleinrichtung 4, deren Funktionsweise weiter unten näher erläutert werden wird, vorgegeben wird.

Am Ausgang der adaptiven Filtereinrichtung 1 steht ein gefiltertes Motorstromsignal $I_{Motor,\ gefiltert}$ zur Verfügung, das in dem hier gezeigten Ausführungsbeispiel einem Schwellwertmodul 2 zugeführt wird, innerhalb dessen ein Schwellwertverfahren ausgeführt wird, um aus dem gefilterten Motorstromsignal $I_{Motor}$, gefiltert einen Rechteckimpuls zu generieren, der für einen detektierten Ripple steht. Im Schwellwertmodul 2 wird also mit anderen Worten mittels des Schwellwertverfahrens aus dem gefilterten Motorstromsignal $I_{Motor,\ gefiltert}$ die darin enthaltene Rippleinformation extrahiert. Das im Schwellwertmodul 2 ausgeführte Schweilwertverfahren umfasst mindestens einen Schwellwert. Es besteht alternativ auch die Möglichkeit, dass mehrere (also mindestens zwei) Schwellwerte vorgesehen werden, die vorzugsweise über den möglichen Amplitudenbereich des gefilterten Motorstromsignals $I_{Motor,\ gefiltert}$ verteilt sind. Bei der Durchführung des Schwellwertverfahrens wird überprüft, ob die Amplitude des gefilterten Motorstromsignals $I_{Motor,\ gefiltert}$ mindestens eine der Schaltschwellen überschreitet. Damit durch die Anzahl der verschiedenen Schwellwerte keine Fehlinterpretationen des gefilterten Motorstromsignals $I_{Motor,\ gefiltert}$ entstehen, werden die einzelnen Schwellwerte - vorzugsweise über eine Logikschaltung - miteinander verknüpft. Ein Kernelement dieser Logikschaltung kann insbesondere ein konstanter oder ein dynamischer Zeitwert sein, mittels dessen eine Plausibilisierung der einzelnen Schwellwerte abgesichert werden kann. Aus dem gefilterten Motorstromsignal $I_{Motor,\ gefiltert}$ wird in dem hier gezeigten Ausführungsbeispiel in Abhängigkeit von den erfassten Ripplesignalen ein Rechtecksignal erzeugt und ausgegeben.

Die Rippleinformation, die aus dem gefilterten Motorstromsignal $I_{Motor,\ gefiltert}$ extrahiert werden kann, wird der oben bereits erwähnten Frequenzeinstelleinrichtung 4 sowie einem Positionszähler 3 zur Verfügung gestellt. Im Positionszähler 3 wird aus dem Ripple ein Positionssignal des permanenterregten Gleichstrommotors ermittelt und in der Frequenzeinstelleinrichtung 4 wird die Rippleinformation dazu genutzt, um die Ripplefrequenz $f_{Ripple}$ zu ermitteln. Wird ein Ripplesignal detektiert, wird durch eine logische Verknüpfung mit der Drehrichtung des permanenterregten Gleichstrommotors der Zählerstand herauf- oder heruntergezählt. Über die Anzahl der detektierten Ripple kann folglich die Position des Antriebs bestimmt werden. Aus den (zeitlichen) Abständen zwischen zwei Ripplen kann darüber hinaus auch die Drehzahl des Gleichstrommotors (und damit auch dessen Geschwindigkeit) bestimmt werden. Optional kann eine Plausibilisierungszeit $t_P$ aus der Ist-Frequenz $f_{Ripple}$ der Ripple ermittelt werden, die dann wieder an das Schwellwertmodul 2, in dem das Schwellwertverfahren ausgeführt wird, übergeben wird.

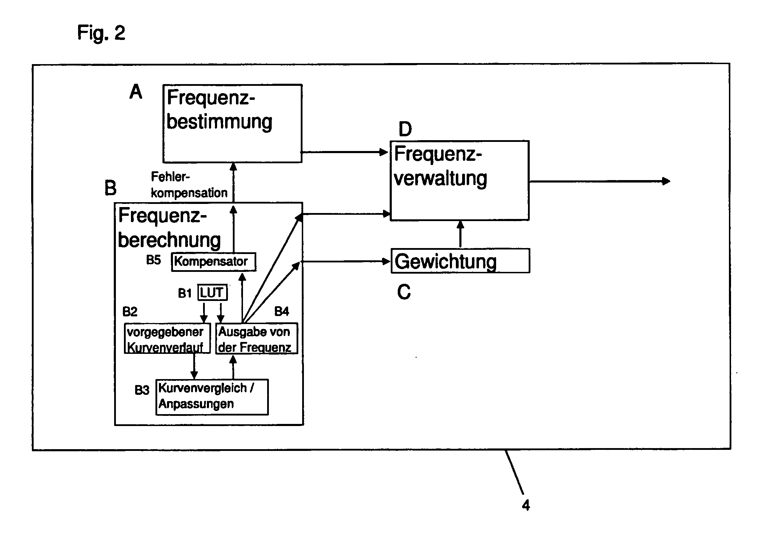

Nachfolgend soll unter weiterer Bezugnahme auf Fig. 2 näher auf den Aufbau sowie auf die Funktion der Frequenzeinstelleinrichtung 4 eingegangen werden. In dem hier gezeigten Ausführungsbeispiel sind in der Frequenzeinstelleinrichtung 4 drei Funktionsmodelle (A: Frequenzbestimmung, B: Frequenzberechnung und C: Gewichtung) hinterlegt, die nachfolgend im Detail erläutert werden sollen. Darüber hinaus ist im Funktionsblock D der Frequenzeinstelleinrichtung 4 eine Frequenzverwaltung vorgesehen.

Das in der Frequenzeinstelleinrichtung 4 hinterlegte Funktionsmodell A zur Frequenz bestimmung ermittelt aus den momentan im gefilterten Motorstromsignal $I_{Motor,\ gefiltert}$ detektierten Ripplen die aktuelle Ist-Frequenz $f_{Ripple}$ der Ripple, die nachfolgend kurz als Ripplefrequenz bezeichnet werden soll. Dabei wird aus dem Abstand der Ripple die Periodendauer $T_n$ ermittelt und in einem weiteren Schritt in eine Frequenz umgerechnet, welche die Ripplefrequenz $f_{Ripple}$ bildet. Die Ist-Frequenz $f_{Ripple}$ der Ripple gibt unter anderem Aufschluss über die momentane Drehzahl des permanenterregten Gleichstrommotors.

Ein Problem bei der Bestimmung der Ripplefrequenz $f_{Ripple}$ ergibt sich insbesondere während der Anlaufphase des permanenterregten Gleichstrommotors. Da die Anzahl der Ripple von der Anzahl der Nuten pro Umdrehung unmittelbar abhängig ist, liegt ein System mit eingeschränkter Auflösung vor. Gegeben ist also der Fall, dass die Winkelgeschwindigkeit des Ankers des permanenterregten Gleichstrommotors während der Anlaufphase nicht linear ansteigt. Das bedeutet, dass die Frequenzermittlung während der Anlaufphase mit erheblichen Fehlern behaftet ist. Eine einfache Mittelwertbildung kann eine Frequenzrampe nämlich nicht richtig abbilden. Daher wird durch eine Abschätzung der Steigung des Kurvenverlaufs in der Frequenzeinstelleinrichtung 4 eine Fehlinterpretation bei der Frequenzbestimmung vermieden.

Das in der Frequenzeinstelleinrichtung 4 vorgesehene Funktionsmodell B der Frequenzberechnung nutzt in dem hier gezeigten Ausführungsbeispiel ein vereinfachtes Modell aus zwei Exponentialfunktionen. Folgende Gleichungen für den momentanen Strom $I_M$ sowie für die momentane Frequenz $f_M$ werden dabei verwendet:

**Gleichung (1):**

$$I_M = \frac{U}{R_k(1+\Delta T \cdot \alpha)} \cdot e^{-t/\tau} + I_y$$

Gleichung (2):

$$f_M = f \cdot (1 - e^{-t/\tau})$$

In den beiden vorstehend aufgeführten Gleichungen ist U die Spannung, $R_k$ der Kaltwiderstand, $\Delta T$ die Temperaturdifferenz, $\alpha$ der Temperaturkoeffizient, t die Zeit, $\tau$ die mechatronische Zeitkonstante, $I_y$ der Offset-Strom und f die Frequenz.

Allgemein arbeitet die Frequenzberechnung bei dem hier vorgestellten Verfahren nur während der Anlaufphase des permanenterregten Gleichstrommotors. Der Hintergrund dafür liegt in der anfangs hohen Systemdynamik, die durch die Frequenzberechnung abgesichert werden soll. Betrachtet man nun die Gleichung (1) und die Gleichung (2), so wird deutlich, dass der Zusammenhang in der mechatronischen Zeitkonstanten $\tau$ liegt.

Durch eine Adaptierung der mechatronischen Zeitkonstante $\tau$ an den tatsächlichen Stromverlauf lässt sich folglich auch ein korrekter Frequenzverlauf ableiten. Zu diesem Zweck werden im Funktionsblock B1 in einer Nachschlagetabelle (engl.: Look-up-Table, kurz: LUT) Werte für den Offset-Strom $I_y$ und die maximale Frequenz vorgegeben und abrufbar gespeichert, um damit die für die Durchführung des Verfahrens notwendigen Rechenoperationen zu verringern. Die Nachschlagetabelle umfasst somit spezielle Datensätze, die ihrerseits eine Funktion der Spannung sind, und dient der schnellen und effizienten Berechnung der idealen Exponentialfunktionen für $I_M$ und $f_M$, wobei die mechatronische Zeitkonstante $\tau$ nicht unbedingt vorgegeben werden muss.

Die durch Gleichung (1) mathematisch beschriebene Kurve des momentanen Stroms $I_M$ wird bei der Durchführung des Verfahrens mit dem tatsächlichen Verlauf des erfassten Motorstromsignals $I_{Motor}$ verglichen. Tritt der Fall ein, dass die vorgegebene Kurve $I_M$ vom tatsächlichen Stromverlauf $I_{Motor}$ abweicht, muss die Zeitkonstante $\tau$ der Kurve adaptiert werden, um eine bestmögliche Anpassung der vorgegebenen Kurve $I_M$ an den tatsächlichen Stromverlauf $I_{Motor}$ zu erhalten. Die adaptierte Stromkurve $I_M$ hat einen ähnlichen zeitlichen Verlauf wie die Stromkurve $I_{Motor}$. Anhand der Zeitkonstanten $\tau$ beziehungsweise des zeitlichen Verlaufs besteht nun die Möglichkeit, anhand der Gleichung (2) die Frequenzkurve zu ermitteln.

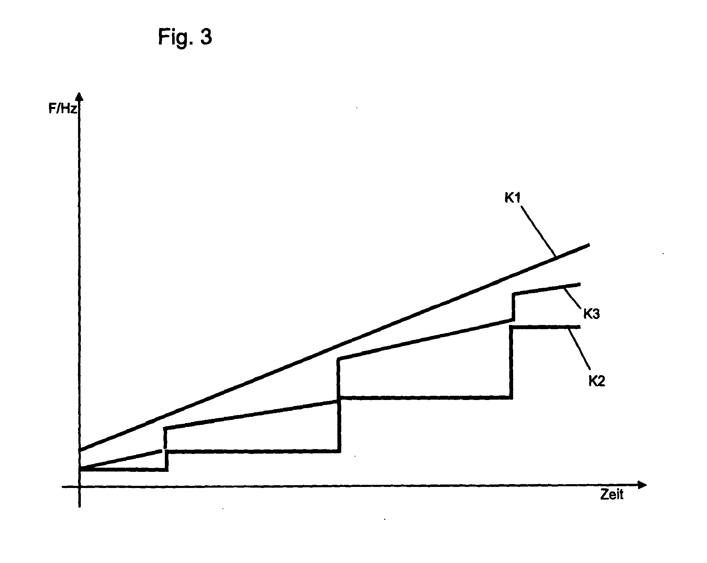

Im Funktionsblock B2 der Frequenzeinstelleinrichtung 4 wird die ideale Exponentialfunktion für $I_M$ berechnet. Zu diesem Zweck werden weitere Größen, wie zum Beispiel der maximale Strom, der Startpunkt, die Energie des Feldes und dergleichen ermittelt und ausgegeben. Im Funktionsblock B3 werden die Kurven miteinander verglichen. Liegt der vorgegebene Stromverlauf $I_M$ in einem gewissen Toleranzbereich um den gemessenen Stromverlauf $I_{Motor}$, so bleibt die Kurve unverändert. Stellt sich jedoch heraus, dass der vorgegebene Stromverlauf $I_M$ und der tatsächliche (gemessene) Stromverlauf $I_{Motor}$ voneinander abweichen, wird der vorgegebene Stromverlauf $I_M$ adaptiert. Dies geschieht in diesem Ausführungsbeispiel durch eine geeignete Anpassung der mechatronischen Zeitkonstante $\tau$. Mit den Vorgaben aus der Nachschlagetabelle und der adaptierten Zeitkonstanten $\tau$ des mechatronischen Systems kann nun im Funktionsblock B4 auf Basis der oben aufgeführten Gleichung (2) die Frequenzkurve des Systems berechnet werden. Mit Hilfe des Funktionsblocks B5 (Kompensator) lässt sich aus der Dynamik des mechatronischen Systems ein Korrekturwert für die Frequenzbestimmung im Funktionsmodell A ermitteln, der diesem zur Verfügung gestellt wird. In Fig. 3 ist der Frequenzverlauf eines permanenterregten Gleichstrommotors während der Anlaufphase in idealisierter Form als linearer Frequenzverlauf dargestellt und mit K1 bezeichnet. Dieser in idealisierter Form dargestellte Frequenzverlauf dient nur zur besseren Verdeutlichung und bildet den realen Frequenzverlauf des permanenterregten Gleichstrommotors während der Anlaufphase nicht exakt ab. Der Frequenzverlauf während der Anlaufphase ist im Idealfall identisch mit dem berechneten Frequenzverlauf, wobei Abweichungen jedoch stets auftreten können. Die mit K2 bezeichnete (untere) Kennlinie beschreibt den Frequenzverlauf, wie er aus der Bestimmung der Periodendauer der Ripple ermittelt werden kann. Es wird deutlich, dass bei dieser Art der Bestimmung des Frequenzverlaufs erhebliche Abweichungen zum tatsächlichen Frequenzverlauf (Kennlinie K1) auftreten. Die mit K3 bezeichnete Kennlinie basiert ebenfalls auf der Periodendauer der Ripple. Allerdings wird jeder Wert - bei jedem Abtastwert - mit dem oben bereits erwähnten Korrekturwert für die Frequenzbestimmung multipliziert, der einen Teil der Steigung der berechneten Kennlinie repräsentiert. Dieser Korrekturwert für die Frequenzbestimmung ist nur ein Teil der Steigung, da die Kurve konservativ ermittelt werden soll, ohne dass ein möglicher Fehler verstärkt wird.

Im Funktionsmodell C (Gewichtung) findet in dem hier gezeigten Ausführungsbeispiel eine Risikobewertung der durch das Funktionsmodell B berechneten Frequenz statt. Dies geschieht insbesondere vor dem Hintergrund, dass die Frequenzberechnung nur in einem Zeitraum bis etwa $2\tau$ einen Vorteil bietet. Bis zu diesem Zeitpunkt ist die Systemdynamik sehr hoch und der Fehler, der durch die verfahrensbedingte Frequenzbestimmung im Funktionsblock A verursacht wird, ist damit ebenfalls hoch. Der Ausgabewert der Gewichtung (Gewichtungsfaktor) ist ein prozentualer Wert, der < 100% ist und typischerweise zwischen 85% und 15% liegt. Dieser Gewichtungsfaktor dient als Multiplikator für die Frequenzberechnung und für die Frequenzbestimmung.

Im Funktionsblock D wird schließlich ein Erwartungswert der Frequenz $\langle f_{Ripple} \rangle$ aus der Frequenzbestimmung, der Frequenzberechnung und der Gewichtung (Risikoabschätzung) bestimmt. Dieser Erwartungswert der Frequenz $<f_{Ripple}>$ wird ausgegeben und als Bandmittenfrequenz $f_B$ der adaptiven Filtereinrichtung 1 zur Verfügung gestellt.

Mit Hilfe des hier vorgestellten Verfahrens ist eine automatische Bestimmung der Systemdynamik und/oder der Position eines permanenterregten Gleichstrommotors möglich, die im Vergleich zu den aus dem Stand der Technik bekannten Lösungen eine höhere Genauigkeit und eine bessere Langzeitstabilität aufweist.

Bezugszeichenliste

1 Filtereinrichtung
2 Schwellwertmodul
3 Positionszähler
4 Frequenzeinstelleinrichtung

### Patentansprüche

**1.** Verfahren zur automatischen Bestimmung der Systemdynamik und/oder der Position eines permanenterregten Gleichstrommotors, bei dem

- ein elektrisches Signal, insbesondere ein Motorstromsignal $I_{Motor}$, des permanenterregten Gleichstrommotors erfasst wird und mittels einer adaptiven Filtereinrichtung (1) mit einer einstellbaren Bandmittenfrequenz $f_B$ gefiltert wird, so dass ein gefiltertes elektrisches Signal erzeugt wird,
- die Ripple des gefilterten elektrischen Signals erfasst werden,
- aus den im gefilterten elektrischen Signal erfassten Ripplen die Ist-Frequenz $f_{Ripple}$ der Ripple bestimmt wird,

**dadurch gekennzeichnet, dass** während der Anlaufphase des permanenterregten Gleichstrommotors die momentane Frequenz $f_M$ der Ripple berechnet wird und ein Erwartungswert der Frequenz $<f_{Ripple}>$ aus der Ist-Frequenz $f_{Ripple}$ der Ripple, der berechneten momentanen Frequenz $f_M$ der Ripple und mindestens einem Gewichtungsfaktor berechnet wird, wobei zur Berechnung der momentanen Frequenz $f_M$ ein mathematisches Modell mit einer Exponentialfunktion für den momentanen Strom $I_M$ sowie mit einer Exponentialfunktion für die momentane Frequenz $f_M$ verwendet wird, die über eine mechatronische Zeitkonstante $\tau$ miteinander verknüpft sind.

**2.** Verfahren nach Anspruch 1, **dadurch gekennzeichnet, dass** der momentane Strom $I_M$ durch die Gleichung

$$I_M = \frac{U}{R_k(1+\Delta T \cdot \alpha)} \cdot e^{-t/\tau} + I_y$$

bestimmt wird, wobei U die Spannung, $R_k$ der Kaltwiderstand, $\Delta T$ die Temperaturdifferenz, $\alpha$ der Temperaturkoeffizient, t die Zeit, $\tau$ die mechatronische Zeitkonstante und $I_y$ der Offset-Strom ist.

**3.** Verfahren nach Anspruch 1 oder 2, **dadurch gekennzeichnet, dass** der momentane Strom $I_M$ mit dem tatsächlichen Verlauf des Motorstroms $I_{Motor}$ verglichen wird und die mechatronische Zeitkonstante $\tau$ adaptiert wird, wenn der momentane Strom $I_M$ vom tatsächlichen Stromverlauf $I_{Motor}$ abweicht.

**4.** Verfahren nach einem der Ansprüche 1 bis 3, **dadurch gekennzeichnet, dass** die momentane Frequenz durch die Gleichung

$$f_M = f \cdot (1 - e^{-t/\tau})$$

bestimmt wird, wobei t die Zeit, $\tau$ die mechatronische Zeitkonstante und f die Frequenz ist.

**5.** Verfahren nach einem der Ansprüche 2 bis 4, **dadurch gekennzeichnet, dass** in einer Nachschlagetabelle Werte für den Offset-Strom $I_y$ und/oder für die maximale Frequenz abrufbar gespeichert werden.

**6.** Verfahren nach einem der Ansprüche 1 bis 5, **dadurch gekennzeichnet, dass** der Erwartungswert der Frequenz $<f_{Ripple}>$ der adaptiven Filtereinrichtung (1) als Bandmittenfrequenz $f_B$ zur Verfügung gestellt wird.

**7.** Verfahren nach einem der Ansprüche 1 bis 6, **dadurch gekennzeichnet, dass** die Frequenzberechnung nur in einem Zeitraum bis etwa $2\tau$ durchgeführt wird.

**8.** Verfahren nach einem der Ansprüche 1 bis 7, **dadurch gekennzeichnet, dass** mittels eines Schwellwertverfahrens aus dem gefilterten Motorstromsignal $I_{Motor,\ gefiltert}$ die darin enthaltene Rippleinformation extrahiert wird.

### Claims

**1.** Method for automatically determining the system dynamics and/or the position of a permanently excited direct-current motor, in which

- an electrical signal, in particular, a motor current signal $I_{Motor}$, of the permanently excited direct-current motor is detected and is filtered by means of an adaptive filter device (1) with an adjustable center band frequency $f_B$, so that a filtered electrical signal is generated,
- the ripples of the filtered electrical signal are detected,
- the actual frequency $f_{Ripple}$ of the ripples is determined from the ripples detected in the filtered electrical signal,

**characterized in that**, during the start-up phase of the permanently excited direct-current motor, the instantaneous frequency $f_M$ of the ripple is calculated and an expected value of the frequency $<f_{Ripple}>$ is calculated from the actual frequency $f_{Ripple}$ of the ripple, the calculated instantaneous frequency $f_M$ of the ripple, and at least one weight factor, wherein a mathematical model is used for calculating the instantaneous frequency $f_M$ with an exponential function for the instantaneous current $I_M$ and with an exponential function for the instantaneous frequency $f_M$, which are linked with each other by means of a mechatronic time constant $\tau$.

**2.** Method according to Claim 1, **characterized in that** the instantaneous current $I_M$ is determined by the equation

$$I_M = \frac{U}{R_k(1+\Delta T \cdot \alpha)} \cdot e^{-t/\tau} + I_y$$

wherein U is the voltage, $R_k$ is the cold resistance, $\Delta T$ is the temperature difference, $\alpha$ is the temperature coefficient, t is time, $_T$ is the mechatronic time constant, and $I_y$ is the offset current.

**3.** Method according to Claim 1 or 2, **characterized in that** the instantaneous current $I_M$ is compared with the actual progression of the motor current $I_{Motor}$ and the mechatronic time constant $\tau$ is adapted if the instantaneous current $I_M$ deviates from the actual current progression $I_{Motor}$.

**4.** Method according to one of Claims 1 to 3, **characterized in that** the instantaneous frequency is determined by the equation

$$f_M = f \cdot (1 - e^{-t/\tau})$$

wherein t is time, $\tau$ is the mechatronic time constant, and f is the frequency.

**5.** Method according to one of Claims 2 to 4, **characterized in that** the values for the offset current $I_y$ and/or for the maximum frequency are stored in a reference table in a retrievable manner.

**6.** Method according to one of Claims 1 to 5, **characterized in that** the expected value of the frequency $<f_{Ripple}>$ is provided to the adaptive filter device (1) as center band frequency $f_B$.

**7.** Method according to one of Claims 1 to 6, **characterized in that** the frequency calculation is performed only in a time period of up to approximately $2\tau$.

**8.** Method according to one of Claims 1 to 7, **characterized in that** the ripple information contained in the filtered motor current signal is extracted from the filtered motor current signal $I_{Motor,\ gefiltert}$ by means of a threshold method.

## Revendications

**1.** Procédé pour la détermination automatique de la dynamique du système et/ou de la position d'un moteur à courant continu excité en permanence auquel

- un signal électrique, surtout un signal de courant moteur $I_{Moteur}$ du moteur à courant continu excité en permanence sera saisi et filtré au moyen d'un dispositif à filtre (1) adaptatif à une fréquence au centre de la bande réglable $f_B$ de manière à ce qu'un signal électrique filtré soit généré,
- les ondulations (ripples) du signal électrique filtré sont saisies,
- la fréquence réelle $f_{Ripple}$ des ondulations est déterminée par les ondulations saisies du signal électrique filtré,

**caractérisé en ce que**
pendant la phase de démarrage du moteur à courant continu excité en permanence la fréquence momentanée $f_M$ des ondulations sera calculée et une valeur d'attente de la fréquence $<f_{Ripple}>$ sera calculée de la fréquence réelle $f_{Ripple}$ des ondulations, de la fréquence momentanée calculée $f_M$ des ondulations et d'au moins un facteur de pondération, étant utilisé pour la calculation de la fréquence momentanée $f_M$ un modèle mathématique avec une fonction exponentielle pour le courant momentané $I_M$ et avec une fonction exponentielle pour la fréquence momentanée $f_M$ qui sont reliées entre eux par une constante de temps mécatronique $_T$.

**2.** Procédé selon la revendication 1, **caractérisé en ce que** le courant momentané $I_M$ sera déterminé par l'équation

$$I_M = \frac{U}{R_k(1+\Delta T\cdot\alpha)}\cdot e^{-t/\tau} + I_y$$

où U = la tension, $R_k$ = la résistance à froid, $\Delta T$ = la différence de température, $\alpha$ = coefficient de température, t = le temps, $\tau$ = la constante de temps mécatronique et $I_y$ = le courant offset.

3. Procédé selon la revendication 1 ou 2, **caractérisé en ce que** le courant momentané $I_M$ sera comparé avec le tracé réel du courant moteur $I_{Moteur}$ et la constante de temps mécatronique $_\tau$ sera adapté lorsque le courant momentané $I_M$ diffère du tracé réel du courant $I_{Moteur}$.

4. Procédé selon l'une des revendications 1 à 3, **caractérisé en ce que** la fréquence momentanée sera déterminée par l'équation

$$f_M = f\cdot(1-e^{-t/\tau})$$

où t = le temps, $_\tau$ = la constante de temps mécatronique et f = la fréquence.

5. Procédé selon l'une des revendications 2 à 4, **caractérisé en ce que** les valeurs pour le courant offset $I_y$ et/ou pour la fréquence maximale sont mémorisées de manière disponible dans un tableau de consultation.

6. Procédé selon l'une des revendications 1 à 5, **caractérisé en ce que** la valeur d'attente de la fréquence $<f_{Ripple}>$ sera mise à disposition au dispositif à filtre (1) adaptatif comme fréquence au centre de la bande réglable $f_B$.

7. Procédé selon l'une des revendications 1 à 6, **caractérisé en ce que** la calculation de la fréquence ne sera réalisée que dans une période jusqu'à environ $2_\tau$.

8. Procédé selon l'une des revendications 1 à 7, **caractérisé en ce que** l'information sur les ondulations sera extraite du signal de courant moteur filtré $I_{Moteur,\ filtré}$ au moyen d'un procédé de valeur seuil.

1
$I_{Motor}$
$f_B$
$I_{Motor,gefiltert}$
2
3
4
$<f_{Ripple}>$
$t_p$


Fig. 1

A
Frequenz-
bestimmung
Fehler-
kompensation
B
Frequenz-
berechnung
B5
Kompensator
B1
LUT
B2
vorgegebener
Kurvenverlauf
B3
Kurvenvergleich /
Anpassungen
B4
Ausgabe von
der Frequenz
D
Frequenz-
verwaltung
Gewichtung
C
4

Fig. 2

F/Hz
Zeit
K1
K2
K3

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19511307 C1
- EP 1659693 A1
- DE 10124615 A1